# EUROPÄISCHE PATENTANMELDUNG

(11) **EP 1 582 765 A1**
(43) Veröffentlichungstag der Anmeldung: **05.10.2005**
(21) Anmeldenummer: 04007610.1
(22) Anmeldetag: 30.03.2004
(51) Int. Cl.: F16F 15/12

(54) **Antriebsstrang**

(71) Anmelder: BorgWarner Inc., MI 48326 (US)
(72) Erfinder: Kroll, Jürgen, 68775 Ketsch (DE); Heinz, Volker, 67354 Römerberg (DE); Strauss, Dietmar, 76703 Kraichtal (DE)
(74) Vertreter: Patentanwälte Westphal, Mussgnug & Partner

(57) **Zusammenfassung**

Antriebsstrang, welcher aus einem Motorgehäuse in ein Getriebegehäuse (42) geführt wird, mit einer mit einem Motor verbundenen Kurbelwelle (10), einer mit einer Drehschwingungsdämpfereinheit (50) verbundenen Kupplungsvorrichtung (60), einer aus einem Schwungrad (14) und einem Abkopplungselement (12) bestehenden Verbindung zwischen der Kurbelwelle (10) und einer Dämpfernabe (20) der Drehschwingungsdämpfereinheit (50) und wenigstens einer mit der Kupplungsvorrichtung (60) verbundenen Getriebeeingangswelle (44, 46), wobei zwischen der Dämpfernabe (20) der Drehschwingungsdämpfereinheit (50) und dem Getriebegehäuse (42) ein Pendellager (30) angeordnet ist.

## Beschreibung

Die Erfindung betrifft einen Antriebsstrang gemäß dem Oberbegriff des Patentanspruchs 1.

Die Erfindung geht von einem Antriebsstrang an sich bekannter Art aus. Dieser Antriebsstrang, welcher aus einem Motorgehäuse in ein Getriebegehäuse geführt wird, besteht aus einer mit einem Motor verbunden Kurbelwelle, einer mit einer Drehschwingungsdämpfereinheit verbundenen Kupplungsvorrichtung, einer aus einem Schwungrad und einem Abkopplungselement bestehenden Verbindung zwischen der Kurbelwelle und einer Dämpfernabe der Drehschwingungsdämpfereinheit sowie wenigstens einer mit der Kupplungsvorrichtung verbundenen Getriebeeingangswelle. Bei der festen Anbindung des Motorgehäuses an ein Getriebegehäuse und somit der Verbindung der vom Motor angetriebenen Kurbelwelle an die Kupplung-Dämpfer-Einheit treten aufgrund von fertigungstechnischen Toleranzen Montagefehler wie z.B. ein Achsversatz zwischen der Achse der Kurbelwelle und der Achsen der Getriebeeingangswellen auf. Diese Montagefehler resultieren in axialen und radialen Verspannungen. Zusätzlich werden durch die Bewegung der Kurbelwelle Axial-, Radial- und Taumelschwingungen in das System eingebracht. Durch die aus einem Schwungrad und einem Abkopplungselement bestehende Verbindung zwischen der Kurbelwelle und der Dämpfernabe der Drehschwingungsdämpfereinheit können alle diese vorerwähnten Schwingungen gedämpft sowie gegebenenfalls radiale Versätze kompensiert werden.

Obwohl sich derartige Antriebsstränge dem Grunde nach bewährt haben, wurde festgestellt, dass weiterhin Verspannungen zwischen der Dämpfernabe der Drehschwingungsdämpfereinheit und dem Gehäuse des Getriebes auftreten. Somit werden gerade diese Bauteile besonders beansprucht und unterliegen einem hohem Verschleiß.

Die Aufgabe der Erfindung besteht daher darin, einen Antriebsstrang der vorstehend genannten Art derart auszubilden und weiterzubilden, dass der Verschleiß der Einzelteile deutlich reduziert wird.

Diese Aufgabe wird erfindungsgemäß gelöst durch einen Antriebsstrang mit den Merkmalen des Patentanspruchs 1.

Vorteilhafte Weiterbildungen der Erfindung sind in den Unteransprüchen angegeben.

Erfindungsgemäß ist zwischen der Dämpfernabe der Drehschwingungsdämpfereinheit und dem Getriebegehäuse ein Pendellager angeordnet. Über das Pendellager werden Radialversätze zwischen der Dämpfernabe der Drehschwingungsdämpfereinheit und der Kurbelwelle in einen Winkelausschlag der ersten Halbschale in der Drehschwingungsdämpfereinheit umgesetzt. Da die erste Halbschale der Drehschwingungsdämpfereinheit über die Federn beweglich in der Drehschwingungsdämpfereinheit gelagert ist, können die axialen und radialen Bewegungen der ersten Halbschale in der Drehschwingungsdämpfereinheit aufgenommen werden, ohne die Funktionsweise der Kupplungsvorrichtung zu beeinträchtigen.

Vorzugsweise ist das Pendellager ein Pendelkugellager.

Bei einer vorteilhaften Weiterbildung der Erfindung läuft die Dämpfernabe in einem Zentrierzapfen aus, welcher in der Kurbelwelle gelagert ist. Durch eine derartige Lagerung ist gewährleistet, dass sich die Dämpfernabe um den Zentrierzapfen gegenüber der Kurbelwelle verschwenken kann, um eventuelle Versätze ausgleichen zu können.

Vorzugsweise ist das Pendellager in einem Flansch des Getriebedeckels angeordnet. Auf diese Weise ist das Pendellager gegen Axialbewegungen gesichert.

Der erfindungsgemäße Antriebsstrang wird vorzugsweise in einer Ein- oder Mehrfachkupplung in einem Nass- oder Trockenraum verwendet.

Die Erfindung wird anhand der nachfolgenden Figur näher beschrieben. Es zeigt:

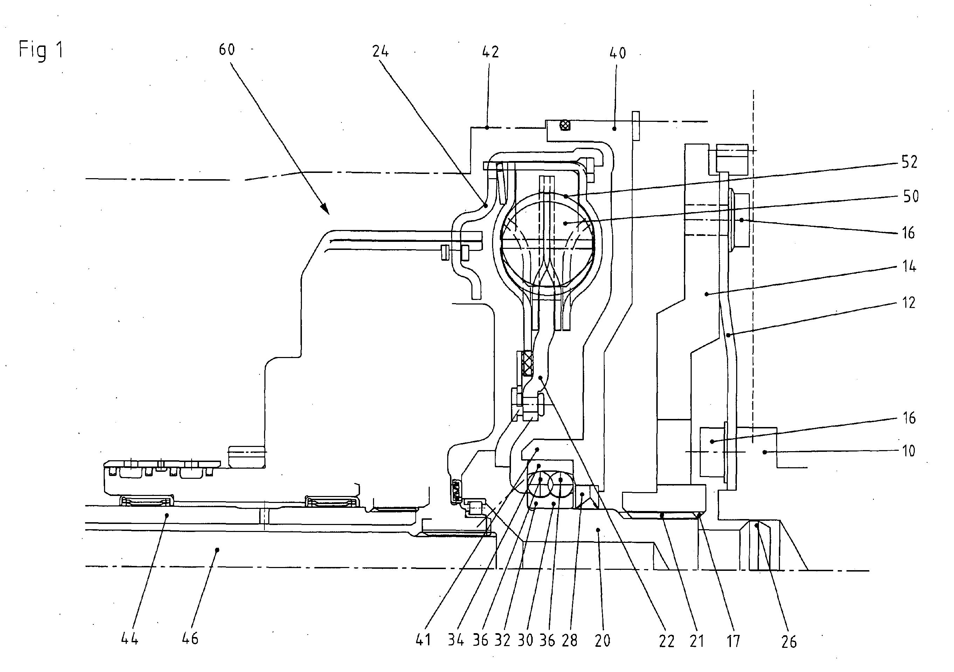

- Figur 1: einen Antriebsstrang, bei welchem erfindungsgemäß zwischen der Dämpfernabe der Drehschwingungsdämpfereinheit und dem Getriebegehäuse ein Pendellager angeordnet ist.

Figur 1 zeigt einen erfindungsgemäßen Antriebsstrang mit einer Kurbelwelle 10, einer Drehschwingungsdämpfungseinheit 15 und einer Kupplungsvorrichtung 60.

Die Kurbelwelle 10 ist mit einem hier nicht dargestelltem Motor verbunden, welcher in einem Motorgehäuse angeordnet ist.

Die Kupplungsvorrichtung 60 und die Drehschwingungsdämpfereinheit 50 sind in einem Getriebegehäuse 42 angeordnet, welches mittels eines Getriebedeckels 40 abgeschlossen ist.

Bei der Kupplungsvorrichtung 60 kann es sich beispielsweise um eine sogenannte Doppellamellenkupplung handeln, welche einen mit einer ersten Getriebeeingangswelle 44, vorliegend einer Hohlwelle 44, verbundenen Innenlamellenträger sowie einen zweiten mit einer zweiten Getriebeeingangswelle 46, vorliegend einer Zentralwelle 46, verbundenen Innenlamellenträger aufweist. Die Ausgestaltung der Kupplungsvorrichtung 60 ist jedoch nicht erfindungswesentlich. Genauso gut könnte hier auch eine einfache Kupplungsvorrichtung Verwendung finden, bei der lediglich ein Innenlamellenträger mit zugeordneter Getriebeeingangswelle verbunden ist, oder eine komplexer aufgebaute Mehrfachkupplungsvorrichtung oder auch eine Doppellamellenkupplung, bei welcher die Außenlamellenträger mit den Getriebeeingangswellen 44 und 46 verbunden sind.

Die zuvor beispielhaft beschriebene Kupplungsvorrichtung 60 weist weiterhin einen ersten und einen zweiten Außenlamellenträger auf, welche mit einer zweiten Halbschale 24 der Drehschwingungsdämpfereinheit 50 an sich bekannter Bauart verbunden sind. Die zweite Halbschale 24 der Drehschwingungsdämpfereinheit 50 ist über eine Mehrzahl in der Drehschwingungsdämpfereinheit 50 außenumfangsseitig angeordneter Federpakete 52 drehschwingungsdämpfend mit einer ersten Halbschale 22 verbunden. Die erste Halbschale 22 ist als Scheibe ausgebildet und weist eine axial verlaufende Dämpfernabe 20 auf. Die Dämpfernabe 20 wird durch eine Öffnung des Getriebedeckels 40 aus dem Getriebegehäuse 42 herausgeführt und dient zum Anschluss an die Kurbelwelle 10 des Motors.

An der Kurbelwelle 10 ist ein ringförmiges Abkopplungselement 12 angeordnet, welches mittels Schrauben 16 drehfest an der Kurbelwelle 10 fixiert ist. An dem Abkopplungselement 12 ist ein Schwungrad 14 ebenfalls über Schrauben 16 fixiert. Das Schwungrad 14 trägt an Innenumfang eine Verzahnung 17, welche in eine außenumfangsseitig angeordnete Verzahnung 21 der Dämpfernabe 20 eingreift. Durch eine flexible Ausgestaltung des Abkopplungselements 12 können axiale Versätze zwischen der Dämpfernabe 20 und der Kurbelwelle 10 sowie daraus resultierende Schwingungen kompensiert bzw. gedämpft werden. Die Dämpfernabe 20 ist über einen Zentrierzapfen 26 in der Kurbelwelle 10 gelagert, wobei die drehfeste Verbindung zwischen der Dämpfernabe 20 und die Kurbelwelle 10 durch das Abkopplungselement 12 und das Schwungrad 14 gebildet wird.

Die Dämpfernabe 20 ist gegenüber dem Getriebedeckel 40 durch eine Dichtung 28, beispielsweise eine Wellendichtung, abgedichtet. Zusätzlich ist zwischen der Dämpfernabe 20 und dem Getriebedeckel 40 ein Pendellager 30 angrenzend an die Dichtung 28 angeordnet. Dabei ist das Pendellager 30 in einen axialen Flansch 41, welcher in dem Getriebedeckel 40 des Getriebegehäuses 42 nach innen verlaufend eingelassen ist, angeordnet.

Das Pendellager 30 ist als Pendelkugellager ausgebildet und weist einen Innenring 32, welcher drehfest mit der Dämpfernabe 20 verbunden ist, sowie einen Außenring 34 auf, welcher drehfest mit dem Getriebedeckel 40 verbunden ist. Zwischen dem Innenring 32 und dem Außenring 34 des Pendellagers 30 befinden sich zwei Reihen von Kugeln 36. Die Innenfläche des Außenrings 34 ist als hohlkugelig geschliffene Rollbahn ausgebildet. Auf diese Weise kann sich der Innenring 32 um den Mittelpunkt des Pendellagers 30 schwenkend in dem Außenring 34 einstellen, so dass das Pendellager 30 unempfindlich gegen Fluchtfehler der Achse des Innenrings 32 und somit der Achse der Dämpfernabe 20 zur Achse des Außenrings 34 und somit zu einer Achse senkrecht zur Oberfläche des Getriebedeckels 40 ist. Zwischen dem Getriebedeckel 40 und der Dämpfernabe 20 werden somit Verspannungen, die aus Fluchtfehlern resultieren, vermieden und die Dämpfernabe 20 kann sich schwenkend um den Mittelpunkt des Pendellagers 30 einstellen, um eventuelle Fluchtfehler auszugleichen. Weiterhin werden durch die Anordnung des Pendellagers 30 angrenzend an die Dichtung 28 die an der Dichtung 28 wirksamen axialen und radialen Ausschläge deutlich verringert, was die Belastung der Dichtung 28 signifikant reduziert.

Der erfindungsgemäße Antriebsstrang mit dem Pendellager (30) ist insbesondere für den Einsatz in Ein- und Mehrfachkupplungen sowohl im Nass- als auch im Trockenraum geeignet.

### Bezugszeichenliste

- 10: Kurbelwelle
- 12: Abkopplungselement
- 14: Schwungrad
- 16: Schrauben
- 17: Verzahnung
- 20: Dämpfernabe
- 21: Verzahnung
- 22: erste Halbschale
- 24: zweite Halbschale
- 26: Zentrierzapfen
- 28: Dichtung
- 30: Pendellager
- 32: Innenring
- 34: Außenring
- 36: Kugeln
- 40: Getriebedeckel
- 41: Flansch
- 42: Getriebegehäuse
- 44: Getriebeeingangswelle
- 46: Getriebeeingangswelle
- 50: Drehschwingungsdämpfereinheit
- 52: Federpaket
- 60: Kupplungsvorrichtung

## Patentansprüche

1. Antriebsstrang, welcher aus einem Motorgehäuse in ein Getriebegehäuse (42) geführt wird,
- mit einer mit einem Motor verbundenen Kurbelwelle (10) ,
- mit einer mit einer Drehschwingungsdämpfereinheit (50) verbundenen Kupplungsvorrichtung (60),
- mit einer aus einem Schwungrad (14) und einem Ab- kopplungselement (12) bestehenden Verbindung zwi- schen der Kurbelwelle (10) und einer Dämpfernabe (20) der Drehschwingungsdämpfereinheit (50),
- mit wenigstens einer mit der Kupplungsvorrichtung (60) verbundenen Getriebeeingangswelle (44, 46),
**dadurch gekennzeichnet, dass** zwischen der Dämpfernabe (20) der Drehschwingungsdämpfereinheit (50) und dem Getriebegehäuse (42) ein Pendellager (30) angeordnet ist.

2. Antriebsstrang nach Anspruch 1,
**dadurch gekennzeichnet, dass** das Pendellager (30) ein Pendelkugellager ist.

3. Antriebsstrang nach Anspruch 1 oder 2,
**dadurch gekennzeichnet, dass** die Dämpfernabe (20) in einem Zentrierzapfen (26) ausläuft, welcher in der Kurbelwelle (10) gelagert ist.

4. Antriebsstrang nach einem der vorhergehenden Ansprüche,
**dadurch gekennzeichnet, dass** das Pendellager (30) in einem Flansch (41) des Getriebedeckels (40) angeordnet ist.

5. Verwendung eines Antriebsstrangs nach einem der vorhergehenden Ansprüche in einer Ein- oder Mehrfachkupplung in einem Nassraum.

6. Verwendung eines Antriebsstrangs nach einem der Ansprüche 1 bis 4 in einer Ein- oder Mehrfachkupplung in einem Trockenraum.
